**Europäisches Patentamt**

**European Patent Office**

**Office européen des brevets**

(19)

(11) Veröffentlichungsnummer: **0 024 725**
**B1**

(12) **EUROPÄISCHE PATENTSCHRIFT**

(45) Veröffentlichungstag der Patentschrift:
**27.04.83**

(51) Int. Cl.³: **H 04 Q 11/04**

(21) Anmeldenummer: **80105097.2**

(22) Anmeldetag: **27.08.80**

(54) **Schaltungsanordnung zum Anschluss von Abfrageplätzen an eine mehrstufige, zeitmultiplexe Fernsprechvermittlungsanlage.**

(30) Priorität: **03.09.79 DE 2935545**

(43) Veröffentlichungstag der Anmeldung:
**11.03.81 Patentblatt 81/10**

(45) Bekanntmachung des Hinweises auf die Patenterteilung:
**27.04.83 Patentblatt 83/17**

(84) Benannte Vertragsstaaten:
**AT BE FR GB IT NL**

(56) Entgegenhaltungen:
**DE-B-1 800 714**
**DE-B-2 211 400**
**DE-B-2 819 126**
**US-A-3 395 254**

(73) Patentinhaber: **Telefonbau und Normalzeit GmbH, Mainzer Landstrasse 128-146 Postfach 4432, D-6000 Frankfurt (Main) (DE)**

(72) Erfinder: **Agricola, Manfred, Dipl.-Ing., Rhönstrasse 15, D-6368 Bad Vilbel (DE)**
Erfinder: **Krautkrämer, Willfried, Dipl.-Ing., Waldschulstrasse 115, D-6230 Frankfurt 80 (DE)**
Erfinder: **Pohlit, Reinhold, Dipl.-Ing., Bettinastrasse 29, D-6000 Frankfurt (Main) (DE)**

Schaltungsanordnung zum Anschluss von Abfrageplätzen an eine mehrstufige,
zeitmultiplexe Fernsprechvermittlungsanlage

Die Erfindung betrifft eine Schaltungsanordnung zum Anschluss von Abfrageplätzen an eine mehrstufige, zeitmultiplexe Fernsprechvermittlungsanlage, bei welcher die erste Koppelstufe aus mehreren Koppelgruppen gebildet wird, an welchen Teilnehmeranschlussschaltungen, Verbindungsleitungen, Abfrageplätze, usw. angeschlossen sind, wobei ausschliesslich für die Abfrageplätze eine oder mehrere Koppelgruppen vorgesehen sind, und jeweils eine Koppelgruppe über eine in beiden Richtungen betriebene, zeitmultiplexe Zwischenleitung mit der nachfolgenden Koppelstufe verbunden ist.

In der DE-B-2 211 400 wird ein zweistufiges zeitmultiplexes Fernsprechvermittlungssystem beschrieben, bei welchem ebenfalls die erste Koppelstufe aus einzelnen Koppelgruppen gebildet wird und an einer dieser Koppelgruppen, welche als Sondergruppe bezeichnet ist, die Bedienplätze angeschlossen sind.

Bedienplätze werden beispielsweise in der öffentlichen Vermittlungstechnik zur Abwicklung von Sonderdiensten benötigt, während in der Fernsprechnebenstellentechnik diese zur Weitervermittlung der auf den Verbindungsleitungen ankommenden Anrufe verwendet werden. Für den letzteren Zweck sind diese als sogenannte Abfrageplätze ausgebildet. Unabhängig von der Art des Einsatzes eines Bedienplatzes ist die Forderung, dass von jedem Bedienplatz der Zugriff zu allen Anschlüssen einer Vermittlungsanlage gegeben sein muss.

Werden nun alle Bedienplätze einer Vermittlungsanlage an eine Koppelgruppe der ersten Koppelstufe des Vermittlungsnetzwerkes angeschlossen, so ist der Zugang zu allen übrigen Anschlüssen des Vermittlungsnetzwerkes nur über die zweite Koppelstufe möglich.

Die Aufgabe der vorliegenden Erfindung besteht deshalb darin, eine Lösung anzugeben, welche den Zugang zu allen übrigen Anschlüssen einer mehrstufigen Vermittlungsanlage ohne Inanspruchnahme der zweiten Koppelstufe ermöglicht.

Erfindungsgemäss wird diese Aufgabe dadurch gelöst, dass die Anschaltung der über die sonstigen Koppelgruppen der ersten Koppelstufe erreichbaren Anschluss- und Verbindungsleitungen an einem Abfrageplatz über eine zwischen die erste und zweite Koppelstufe eingeschleifte, zusätzliche Koppelstufe erfolgt, deren den Abfrageplätzen zugeordneten Anschlüsse über Umschalteeinrichtungen an diejenigen Zwischenleitungen angeschlossen sind, die die den Abfrageplätzen zugeordneten Koppelgruppen der ersten Koppelstufe mit der zweiten Koppelstufe verbinden und dass die den Anschluss- und Verbindungsleitungen zugeordneten Anschlüsse der zusätzlichen Koppelstufe an die die übrigen Koppelgruppen der ersten Koppelstufe mit der zweiten Koppelstufe verbindenden Zwischenleitungen angeschlossen sind. Diese zusätzliche Koppelstufe wird parallel zur zweiten Koppelstufe betrieben und entlastet diese durch Übernahme des gesamten Verkehrs, welcher von den Abfrage- oder Bedienplätzen kommt. Die für die Abwicklung von Vermittlungsvorgängen benötigten Zeitlagen in der zweiten Koppelstufe werden nun frei und können für die Durchschaltung weiterer Verbindungen verwendet werden.

Eine vorteilhafte Weiterbildung der Erfindung besteht darin, dass in der zusätzlichen Koppelstufe jede Zwischenleitung, welche die Koppelgruppen mit Teilnehmer- und/oder Verbindungsverkehr mit der nachfolgenden Koppelstufe verbindet, an einem Zeitmultiplexschalter angeschlossen ist, dass die Ausgänge der Zeitmultiplexschalter für die ankommende Richtung mit einem Multiplexer und die Ausgänge für die abgehende Richtung mit einem Demultiplexer verbunden sind und der Ausgang des Multiplexers an der Umschalteeinrichtung für die ankommende Richtung und der Eingang des Demultiplexers an der Umschalteeinrichtung für die abgehende Richtung angeschlossen ist und die zusätzliche Koppelstufe aus den Zeitmultiplexschaltern, dem Multiplexer und dem Demultiplexer gebildet wird. Die Zeitmultiplexschalter haben dabei die Aufgabe, sowohl für die ankommende als auch für die abgehende Richtung eine Zeitlagenumsetzung vorzunehmen, wodurch eine Verbindung zwischen den Zwischenleitungen mit Teilnehmer- und/oder Verbindungsverkehr und den Zwischenleitungen mit Platzverkehr ermöglicht wird.

Eine vorteilhafte Weiterbildung der Erfindung besteht auch darin, dass die zusätzliche Koppelstufe in zwei Gruppen von Einrichtungen unterteilt ist, wobei jede Gruppe aus einer Vielzahl von Zeitmultiplexschaltern und jeweils einem Multiplexer und einem Demultiplexer gebildet wird, dass die Zwischenleitungen mit Verbindungsverkehr sowohl mit der einen Gruppe von Einrichtungen als auch mit der anderen Gruppe von Einrichtungen der zusätzlichen Koppelstufe verbunden sind, während die Zwischenleitungen mit Teilnehmerverkehr nur mit der zweiten Gruppe von Einrichtungen der zusätzlichen Koppelstufe verbunden sind. Mit dieser Massnahme kann der Aufwand der zusätzlichen Koppelstufe etwas verringert werden, da für die Abfrage nur ein Zugriff zu den Zwischenleitungen mit Verbindungsverkehr benötigt wird.

Eine Weiterbildung der Erfindung besteht auch darin, dass in die an beiden Gruppen angeschlossenen Zwischenleitungen individuelle Schalteinrichtungen zur Unterbrechung derselben eingeschleift sind, wobei die eine Gruppe mit den Zwischenleitungen jeweils vor und die andere Gruppe mit den Zwischenleitungen jeweils hinter den Schalteinrichtungen verbunden sind. Eine derartige Ausbildung der zusätzlichen Koppelstufe hat den Vorteil, dass über beide Gruppen von Einrichtungen, welche vor und hinter den Schalteinrichtungen an den Zwischenleitungen angeschlossen sind, der Abfrageverkehr und der Aufschalteverkehr der Plätze abgewickelt werden kann. Die in die Zwischenleitungen eingeschleiften Schalteinrichtungen ermöglichen die Verwendung des gleichen Zeitschlitzes für die Aufschaltung, wobei in diesem Fall die Zwischenleitungen durch die Schalteinrichtung aufgetrennt wird.

Eine vorteilhafte Weiterbildung der Erfindung besteht auch darin, dass eine Aufschalteeinrichtung mit den Aus- bzw. Eingängen der Multiplexer bzw. der Demultiplexer der zusätzlichen Koppelstufe und mit den an den den Abfrageplätzen zugeordneten Koppelgruppen angeschlossenen Zwischenleitungen verbunden sind, und zwar mit beiden Seiten der in die Zwischenleitungen eingeschleiften Umschalteeinrichtungen. Durch den Zugriff der Aufschalteeinrichtung an alle Zwischenleitungen kann die Information vom Teilnehmer, von der Verbindungsleitung und vom Abfrageplatz in gleicher Weise empfangen und im gleichen Zeitkanal die Mischprodukte auch wieder abgesetzt werden.

Weitere Vorteile der Erfindung ergeben sich aus den Unteransprüchen.

Die Erfindung wird anhand eines Ausführungsbeispiels näher erläutert, welches in der Zeichnung dargestellt ist.

Es zeigen:

Fig. 1 den Anschluss einer zusätzlichen Koppelstufe an die Zwischenleitungen zwischen der ersten und der zweiten Koppelstufe eines Vermittlungsnetzwerks,

Fig. 2 den inneren Aufbau der zusätzlichen Koppelstufe und

Fig. 3 den Anschluss der Aufschalteeinrichtung.

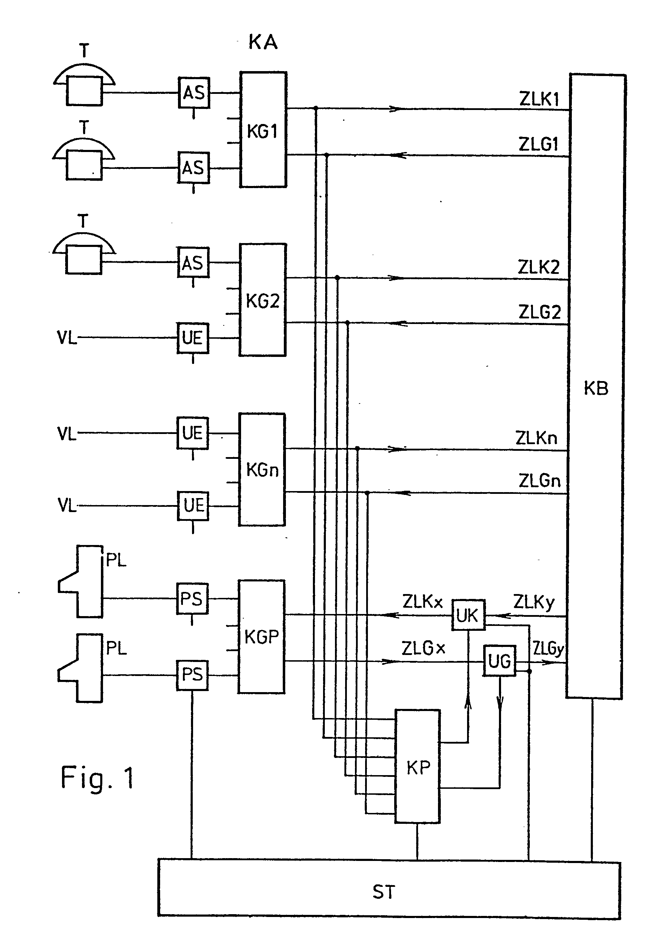

Der Aufbau einer zwei oder mehrstufigen, zeitmultiplexen Vermittlungsanlage wird in Fig. 1 gezeigt, wobei nur die erste und die zweite Koppelstufe dargestellt sind. Diese Koppelstufen können aus einzelnen Koppelfeldern mit raummultiplexer oder auch mit zeitmultiplexer Durchschaltung gebildet werden. Der Aufbau des gesamten mehrstufigen Koppelnetzwerks ist in gestrecker Gruppierung oder auch als Umkehrgruppierung denkbar (siehe beispielsweise DE-B-2 819 126).

Die Koppelstufe KA wird aus einzelnen Koppelgruppen KG gebildet, an welchen die peripheren Einrichtungen angeschlossen sind. Mit der Koppelgruppe KG1 sind über Teilnehmeranschlussschaltungen AS Teilnehmerstationen T verbunden. An der Koppelgruppe KGn sind über Übertragungen UE Verbindungsleitungen VL angeschlossen, die Verbindungsleitungen dienen zum Verkehr von bzw. zur öffentlichen Vermittlungsstelle, wenn es sich bei der Vermittlungsanlage um eine Fernsprechnebenstellenanlage handelt. Es ist auch eine gemischte Anschaltung von Teilnehmerstationen T und Verbindungsleitungen VL an einer Koppelgruppe möglich, wie es an der Koppelgruppe KG2 gezeigt wird. Die Abfrageplätze PL sind jeweils über eine individuelle Platzsteuerung PS mit einer besonderen Koppelgruppe KGP verbunden. Die Zahl der Koppelgruppen KG und der daran angeschlossenen peripheren Einrichtungen (Teilnehmerstationen, Verbindungsleitungen, Abfrageplätze, usw.) richtet sich nach der Grösse der Vermittlungsanlage.

Zur Durchschaltung von Verbindungen zwischen den einzelnen Koppelgruppen KG wird die zweite Koppelstufe KB benötigt, welche über jeweils eine Zwischenleitung ZL mit einer Koppelgruppe KG verbunden ist. Jede Zwischenleitung besteht aus einer Leitung für die ankommende Richtung ZLK und einer Leitung für die gehende Richtung ZLG. Jede Zwischenleitung überträgt die gleiche Anzahl von Zeitlagen innerhalb eines Zeitrahmens und zwar in beiden Richtungen.

Die zeitmultiplexe Durchschaltung der Verbindung kann nun beispielsweise nach dem PAM-(Puls-Amplituden-Modulations-) oder auch nach dem PCM-Puls-Code-Modulations-) Verfahren durchgeführt werden. Im letzteren Fall können beispielsweise die Zwischenleitungen ZL als PCM30- oder PCM32-Leitungssysteme ausgebildet sein. In der weiteren Beschreibung wird davon ausgegangen, dass alle Zwischenleitungen ZL durch derartige Systeme gebildet sind. Auf die Art der Übertragung der Sprachsignale auf den Teilnehmeranschlussleitungen, den Verbindungsleitungen und den Anschlussleitungen der Abfrageplätze wird in diesem Zusammenhang nicht weiter eingegangen, da dies nicht den Gegenstand der Erfindung betrifft.

Die Steuerung der einzelnen Koppelgruppen KG der Koppelstufe KA und die Steuerung der Koppelstufe KB erfolgt über eine Steuereinrichtung ST. Diese kann nun entweder für alle Koppelgruppen KG gemeinsam oder für jede Koppelgruppe KG individuell vorhanden sein. Weiterhin besitzt die Steuereinrichtung ST Zugriff zu den Teilnehmeranschlussschaltungen AS, zu den Leitungsübertragungen UE und zu den Platzsteuerungen PS. Aus- und Einhängemeldungen, Wahlinformationen, die Signalisierung auf der Verbindungsleitung VL und die Ein- und Ausgabesignale von den Abfrageplätzen werden von der Steuereinrichtung ST ausgewertet. Die Aussendung von Hörzeichen kann entweder über die Anschlussschaltungen AS oder auch über die Koppelstufe KA erfolgen.

Durch die zusätzliche Koppelstufe KP, im folgenden Platzkoppelstufe genannt, ist der Zugriff von den an der Koppelgruppe KGP angeschlossenen Zwischenleitungen ZLKx und ZLGx zu den übrigen Zwischenleitungen ZL gegeben. Hierzu ist die Koppelstufe KP einerseits über jeweils eine in die beiden Leitungen der die Koppelgruppe KGP mit der Koppelstufe KB verbindenden Zwischenleitung eingeschleiften Umschalteeinrichtung U und andererseits mit allen übrigen Zwischenleitungen ZL verbunden. Für die ankommende Richtung ist die Zwischenleitung ZLKx mit der Umschalteeinrichtung UK verbunden und als Leitung ZLKy zur Koppelstufe KB weitergeführt. Für die abgehende Richtung ist die Leitung ZLGy von der Koppelstufe KB kommend mit der Umschalteeinrichtung UG verbunden und als Leitung ZLGx zur Koppelstufe KGP weitergeführt. Die beiden Umschalteeinrichtungen UK und UG arbeiten derart, dass entweder eine Verbindung der Leitung ZLKx und der Leitung ZLKy oder zwischen der Leitung ZLKx und der Koppelstufe KP möglich ist. Das gleiche trifft auf die Umschalteeinrichtung UG zu, welche eine Verbindung zwischen der Leitung ZLGx und der Leitung ZLGy bzw. zwischen der Leitung ZLGx und der Koppelstufe KP ermöglicht. Die Koppelstufe KP und die beiden Umschalteeinrichtungen UK und UG werden ebenfalls von der gemeinsamen Steuereinrichtung ST gesteuert.

Die Abfrage eines auf einer Verbindungsleitung VL ankommenden Amtsgesprächs geschieht folgendermassen: Nach Zuteilung einer freien Zeitlage in der betreffenden Koppelgruppe KG wird eine Verbindung von der entsprechenden Zwischenleitung ZL über die Platzkoppelstufe KP, die Umschalteeinrichtung U, die Zwischenleitung ZL, die Koppelgruppe KGP zu einem freien Abfrageplatz PL durchgeschaltet und zwar nur für die betreffende Zeitlage und zwar für die Vorwärts- und die Rückwärtsrichtung (K und G). Die Zeitlagen auf den beiden Zwischenleitungen der Koppelgruppen (KG und KGP) müssen nicht gleich sein, da in der Platzkoppelstufe KP eine Zeitlagenumsetzung stattfindet.

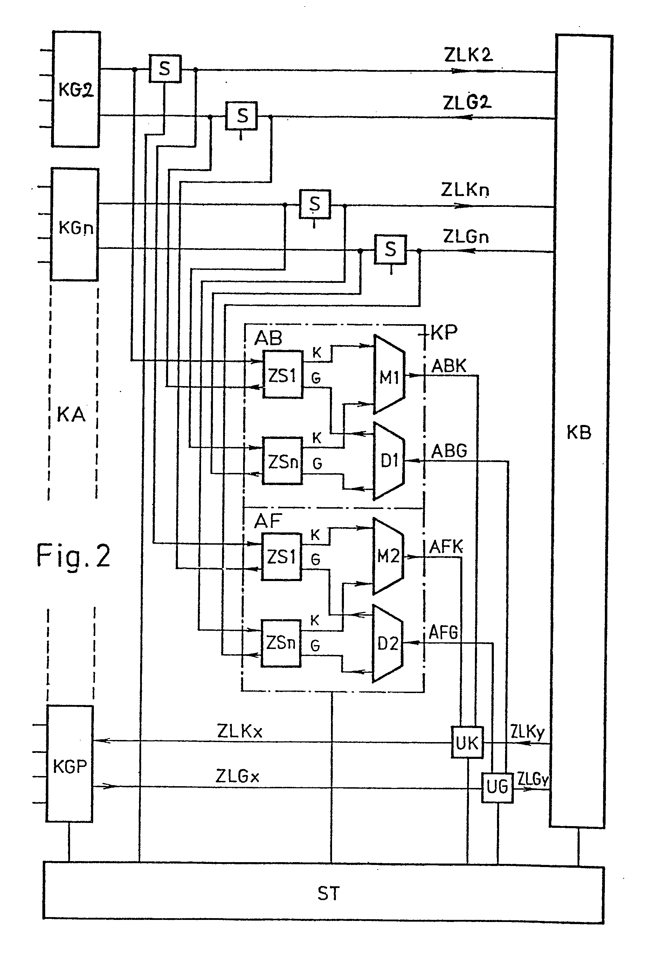

Der Aufbau der Platzkoppelstufe KP wird anhand von Fig. 2 näher erläutert. Die Platzkoppelstufe kann entweder aus einer Gruppe von Einrichtungen AF oder auch aus jeweils einer Gruppe von Einrichtungen AF und AB gebildet werden, wobei die Einrichtungen beider Gruppen gleichartig aufgebaut sind. Beide Gruppen dienen dabei sowohl zum Aufschalten auf eine bestehende Verbindung als auch für die Abfrage von Verbindungen.

Die Gruppe AF ist, wie bereits anhand von Fig. 1 erläutert mit den Zwischenleitungen ZL aller Koppelgruppen KG mit Ausnahme der Koppelgruppe KGP verbunden. Besteht nun die Platzkoppelstufe KP aus den Gruppen AF und AB, so erfolgt die Anschaltung an die Zwischenleitungen ZL derart, dass in die Zwischenleitungen Schalteinrichtungen S eingeschleift werden und der Anschluss der Gruppe AB auf der zur Koppelstufe KA zugewandten Seite und der Anschluss der Gruppe AF an die der Koppelstufe KB zugewandten Seite der Zwischenleitung erfolgt. Die Schalteinrichtungen S haben die Aufgabe, für jeweils eine Zeitlage die Zwischenleitung ZL zu unterbrechen, um auf diese Weise die gleiche Zeitlage für zwei verschiedene Verbindungen belegbar zu machen. Gesteuert werden die Schalteinrichtungen S durch die Steuereinrichtung ST. Eine Gruppe von Einrichtungen AB oder AF besteht aus einer der Zahl der Zwischenleitungen ZL entsprechenden Zahl von Zeitmultiplexschaltern ZS1 bis ZSn. Diese Zeitmultiplexschalter dienen zur Zeitlagenumsetzung und zwar sowohl für die ankommende als auch für die abgehende Richtung (K bzw. G). Die Ausgänge K aller Zeitmultiplexschalter ZS sind mit einem Multiplexer M1 bzw. M2 verbunden. Der Multiplexer M ermöglicht damit den Zugriff zu allen Zeitlagen aller Zwischenleitungen der Koppelgruppen KG1 bis KGn, wobei am Ausgang ABK bzw. AFK wiederum ebensoviele Zeitlagen zur Verfügung stehen, wie Zeitlagen auf jeweils einer Zwischenleitung ZL vorhanden sind. Die Eingänge G aller Zeitmultiplexschalter ZS1 bis ZSn sind mit den Ausgängen eines Demultiplexers D1 bzw. D2 verbunden. Die Demultiplexer bieten den Zugriff zu allen Zwischenleitungen ZL für die gehende Richtung. An den Eingängen ABG bzw. AFG der Demultiplexer D stehen wiederum ebensoviele Zeitlagen zur Verfügung wie Zeitlagen innerhalb einer Zwischenleitung vorhanden sind. Die Ausgänge ABK und AFK der Multiplexer M1 bzw. M2 sind mit der Umschalteeinrichtung UK verbunden, welche in die Zwischenleitung ZLK, welche zur Koppelgruppe KGP führt, verbunden. Die Eingänge ABG und AFG sind mit der Umschalteeinrichtung UG verbunden, welche in die Zwischenleitung ZLG eingeschleift ist, die von der Koppelgruppe KGP zur Koppelstufe KB führt.

Ist eine Koppelgruppe KG der Koppelstufe KA nur mit Teilnehmern beschaltet, so erfolgt der Anschluss der an der Koppelgruppe KG angeschlossenen Zwischenleitung ZL mit den Einrichtungen der Gruppe AF der Platzkoppelstufe KP, wobei eine Schalteinrichtung S in die Zwischenleitung ZL eingeschleift wird. Sind an einer Koppelgruppe KG nur Verbindungsleitungen VL oder Teilnehmer- und Verbindungsleitungen angeschlossen, so erfolgt die Verbindung der betreffenden Zwischenleitung ZL mit den Einrichtungen der Gruppe AB und AF der Platzkoppelstufe KP. In diesem Fall wird keine in die betreffende Zwischenleitung eingeschleifte Schalteinrichtung S benötigt, da die Einrichtungen AF lediglich für das Aufschalten und die Einrichtungen AB lediglich für das Abfragen verwendet werden. Dabei erfolgt die Abfrage über die Einrichtung AB, der ankommende Anruf wird nach Mitteilung des Verbindungswunsches in der Koppelstufe KA gehalten. Die ursprünglich zur Abfrage zugeteilte Zeitlage kann für eine andere Verbindung verwendet werden. Der Platz nimmt über die Einrichtung AB auf einer beliebigen freien Zeitlage Verbindung zum gewünschten Teilnehmer auf und anschliessend wird nach Durchschaltung der Verbindung diese Zeitlage für die betreffende Verbindung weiterverwendet.

Werden alle mit den Koppelgruppen KG1 bis KGn verbundenen Zwischenleitungen ZL an die Platzkoppelstufe KP in der bereits beschriebenen Weise angeschlossen, so kann auf eine Verbindung zwischen den Umschalteeinrichtungen UK und UG und der Koppelstufe KB verzichtet werden, da in diesem Fall der Zugriff zu allen Verbindungen durch die Abfrageplätze PL gewährleistet ist.

Die Steuerung der Einrichtungen der Gruppe AB und der Gruppe AF der Platzkoppelstufe KP erfolgt ebenfalls durch die gemeinsame Steuereinrichtung ST. Durch die Zahl der auf der an der Koppelgruppe KGP angeschlossenen Zwischenleitung verfügbaren Zeitlagen ist die Anzahl der an der Koppelgruppe KGP anschliessbaren Abfrageplätze bestimmt. Bei einer grösseren Zahl von Abfrageplätzen PL ist eine weitere Koppelgruppe KGP der Koppelstufe KA hinzuzufügen, wobei diese ebenfalls durch eine Zwischenleitung ZL mit der Koppelstufe KB verbunden ist. Weiterhin ist eine weitere Platzkoppelstufe KP vorzusehen, welche ebenfalls mit allen übrigen Zwischenleitungen ZL in bereits beschriebener Weise zu verbinden ist. Die Ein- und Ausgänge der Multiplexer M1, M2 bzw. D1, D2 sind wiederum mit den Umschalteeinrichtungen UK bzw. UG verbunden, welche in die Zwischenleitung ZL der hinzugefügten Koppelgruppe KGP eingeschleift sind.

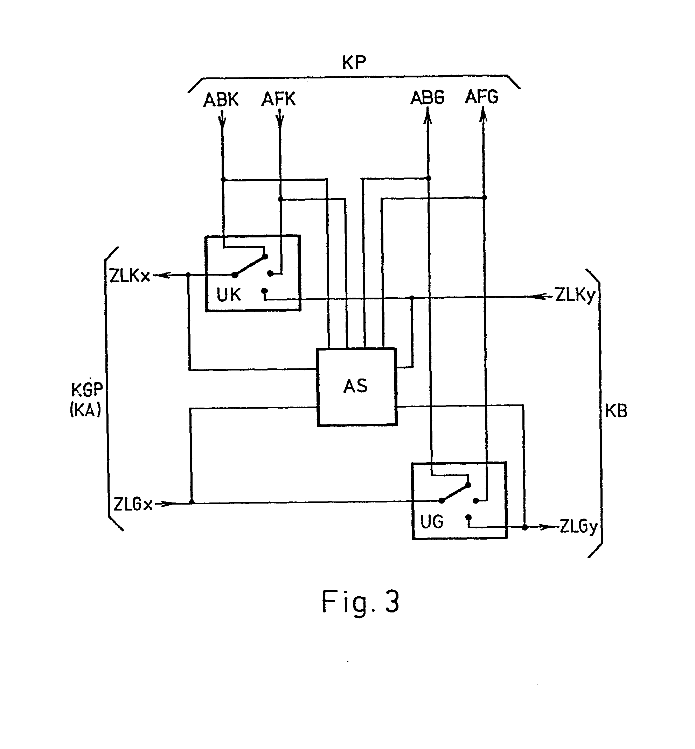

Die Funktion der in die zur Koppelgruppe KPG führenden Zwischenleitung ZL eingeschleiften Umschalteeinrichtungen UK und UG wird anhand von Fig. 3 erläutert. Jede Umschalteeinrichtung U besteht aus einer elektronischen Auswahlschaltung, welche für jeweils eine Zeitlage die Verbindung zwischen der zur Koppelgruppe KGP führenden Zwischenleitung ZL und der Platzkoppelstufe KP oder der Koppelstufe KB ermöglicht. Die Umschalteinrichtung UK ist in die Zwischenleitung ZLK eingeschleift und mit den Ausgängen ABK und AFK der Multiplexer M1 bzw. M2 und der zur Koppelstufe KB führenden Zwischenleitung ZLKy verbunden. Der Anschluss der Umschalteeinrichtung UG erfolgt in gleicher Weise für die abgehende Richtung (G).

Weiterhin ist eine Aufschalteeinrichtung AS mit allen Anschlüssen der beiden Umschalteeinrichtungen UK und UG verbunden. Diese Aufschalteeinrichtung AS dient zur Mischung der Sprachsignale und zwar der drei an einer Aufschalteverbindung beteiligten Stellen. Bei einer Internverbindung handelt es sich dabei um die beiden Teilnehmer und den Abfrageplatz. Der Aufschaltesatz ist auch zum Einspeisen von Anklopfsignalen verwendbar, wobei durch die quasi vierdrähtige Verbindungsdurchschaltung (ankommend und abgehend) eine gezielte Aussendung zu demjenigen Teilnehmer möglich ist, für welchen ein wartender Anruf vorliegt, wobei der andere an der augenblicklichen Verbindung beteiligte Teilnehmer das Anklopfsignal nicht hört. Weiterhin kann der Aufschaltesatz AS auch zur Durchführung von Konferenzgesprächen verwendet werden, an welchen Abfrageplätze nicht unbedingt beteiligt sein müssen. In diesem Fall gehen allerdings die hierzu benötigten Zeitlagen für den Abfrageverkehr verloren.

Auf die Arbeitsweise des Aufschaltsatzes AS, insbesondere auf die zur Durchführung der Mischung der Sprachsignale erforderlichen Massnahmen wird im Rahmen dieser Beschreibung nicht weiter eingegangen, da dies den Gegenstand der Erfindung nicht betrifft und entsprechende Schaltungsanordnungen bereits bekannt sind (beispielsweise DE-B-1 800 714 und US-A-3 395 254).

Im folgenden wird davon ausgegangen, dass ein ankommendes Amtsgespräch zunächst mit einem freien Abfrageplatz und anschliessend mit dem gewünschten Teilnehmer verbunden werden soll. Das auf der Verbindungsleitung VL ankommende Amtsgespräch erhält eine freie Zeitlage auf der an der betreffenden Koppelgruppe KG angeschlossenen Zwischenleitung ZLK und ZLG. Die für die ankommende (K) und die abgehende (G) Richtung gemeinsame Zeitlage wird dem betreffenden Zeitmultiplexschalter ZS der Gruppe AB zugeführt und über den Multiplexer M1 bzw. den Demultiplexer D1 über die Leitungen ABK bzw. ABG den Umschalteeinrichtungen UK bzw. UG zugeführt, dabei kann in dem betreffenden Zeitmultiplexschalter ZS eine Zeitlagenumsetzung durchgeführt werden, falls die gleiche Zeitlage auf der an der Umschalteeinrichtung U angeschlossenen Zwischenleitung nicht verfügbar ist. Über die Koppelgruppe KGP wird die Verbindung zu einem freien Abfrageplatz PL durchgeschaltet. Die Bedienungsperson desselben kann nun den Verbindungswunsch des rufenden Amtsteilnehmers erfragen und die Durchschaltung einer Verbindung vom Abfrageplatz PL zum gewünschten Teilnehmer veranlassen. Hierzu wird die betreffende Schalteinrichtung S in der Zwischenleitung der Amtsverbindung jeweils während der zugeteilten Zeitlage geöffnet und die gleiche Zeitlage für den Aufbau einer Verbindung zum gewünschten Teilnehmer über die Koppelstufe KB benutzt. Die Verbindung von der Zwischenleitung ZL zum Abfrageplatz wird wiederum über die Platzkoppelstufe KP und zwar über die Gruppe AF in gleicher Weise zum Abfrageplatz über die Umschalteeinrichtungen UK und UG aufgebaut.

Die notwendige Zeitlagenumsetzung erfolgt wiederum im Zeitmultiplexschalter ZS der Gruppe AF. Der Abfrageplatz hat nun die Möglichkeit zu einem Gespräch mit dem gewünschten Teilnehmer. Zur Durchschaltung der Verbindung wird die betreffende Schalteinrichtung S von der Steuereinrichtung ST auf Veranlassung des Abfrageplatzes PL aktiviert und die Verbindung zum Abfrageplatz getrennt. Damit ist das ankommende Amtsgespräch mit dem gewünschten Teilnehmer über die Koppelstufe KB verbunden. Die über die Platzkoppelstufe KP verlaufenden Verbindungen sind wieder frei. Bei einem Rückruf wird das ankommende Amtsgespräch wieder über die Platzkoppelstufe KP zu einem freien Abfrageplatz PL geschaltet. Die Aufschaltung auf eine bestehende Verbindung erfolgt über die Gruppe AF und AB der Platzkoppelstufe KP. Da über den Aufschaltesatz AS ein Zugriff zu allen Zwischenleitungen ZL besteht, können dort die Sprachsignale von Teilnehmer, Verbindungsleitung und Abfrageplatz im gleichen Zeitkanal in verschiedenen Aufnahmeeinheiten empfangen und im gleichen Zeitkanal die Mischprodukte wieder abgesetzt werden. Die Aufschaltezeitlage muss nicht mit der Zeitlage der betreffenden Verbindung übereinstimmen da innerhalb der Platzkoppelstufe KP eine Zeitlagenumsetzung vorgenommen werden kann.

Werden die Zwischenleitungen mit Verbindungsverkehr sowohl mit den Einrichtungen AB als auch AF und die Zwischenleitungen mit Internverkehr nur mit den Einrichtungen AF verbunden, wobei Schalteinrichtungen S vorhanden sein können, dann können die Umschalteeinrichtungen UK, UG und die Zwischenleitungen ZLKy und ZLGy, welche diese mit der Koppelstufe KB verbinden, wegfallen. Die Leitungen ABK und ABG von der Koppelstufe KP werden zu diesem Zweck mit den Zwischenleitungen ZLKx und ZLGx verbunden, während die Leitungen AFK und AFG im Aufschaltesatz AS enden.

**Patentansprüche**

1. Schaltungsanordnung zum Anschluss von Abfrageplätzen (PL) an eine mehrstufige, zeitmultiplexe Fernsprechvermittlungsanlage, bei welcher die erste Koppelstufe (KA) aus mehreren Koppelgruppen (KG) gebildet wird, an welchen Teilnehmeranschlussschaltungen, Verbindungsleitungen, Abfrageplätze, usw. angeschlossen sind, wobei ausschliesslich für die Abfrageplätze (PL) eine oder mehrere Koppelgruppen (KP) vorgesehen sind, und jeweils eine Koppelgruppe über eine in beiden Richtungen betriebene zeitmultiplexe Zwischenleitung mit der nachfolgenden Koppelstufe verbunden ist, dadurch gekennzeichnet, dass die Anschaltung der über die sonstigen Koppelgruppen (KG1 bis KGn) der ersten Koppelstufe (KA) erreichbaren Anschluss- und Verbindungsleitungen an einen Abfrageplatz (PL) über eine zwischen die erste (KA) und zweite (KB) Koppelstufe eingeschleifte, zusätzliche Koppelstufe (KP) erfolgt, deren den Abfrageplätzen (PL) zugeordneten Anschlüsse über Umschalteeinrichtungen (UG, UK) an diejenigen Zwischenleitungen (ZLKx, ZLGx) angeschlossen sind, die die den Abfrageplätzen (PL) zugeordneten Koppelgruppen (KGP) der ersten Koppelstufe (KA) mit der zweiten Koppelstufe (KB) verbinden und dass die den Anschluss- und Verbindungsleitungen zugeordneten Anschlüsse der zusätzlichen Koppelstufe (KP) an die übrigen Koppelgruppen der ersten Koppelstufe (KA) mit der zweiten Koppelstufe (KB) verbindenden Zwischenleitungen (ZLK1 bis ZLKn, ZLG1 bis ZLGn) angeschlossen sind.

2. Schaltungsanordnung nach Anspruch 1, dadurch gekennzeichnet, dass in der zusätzlichen Koppelstufe (KP) jede Zwischenleitung (ZLK, ZLG), welche die Koppelgruppen mit Teilnehmer- und/oder Verbindungsverkehr (KG1 bis KGn) mit der nachfolgenden Koppelstufe (KB) verbindet, an einem Zeitmultiplexschalter (ZS) angeschlossen ist, dass die Ausgänge der Zeitmultiplexschalter (ZS) für die ankommende Richtung (K) mit einem Multiplexer (M) und die Ausgänge für die abgehende Richtung (G) mit einem Demultiplexer (D) verbunden sind und der Ausgang des Multiplexers (M) an der Umschalteeinrichtung (UK) für die ankommende Richtung und der Eingang des Demultiplexers (D) an der Umschalteeinrichtung (UG) für die abgehende Richtung angeschlossen ist und die zusätzliche Koppelstufe (KP) aus den Zeitmultiplexschaltern (ZS), dem Multiplexer (M) und dem Demultiplexer (D) gebildet wird.

3. Schaltungsanordnung nach einem der Ansprüche 1 oder 2, dadurch gekennzeichnet, dass die zusätzliche Koppelstufe (KP) in zwei Gruppen von Einrichtungen (AB, AF) unterteilt ist, wobei jede Gruppe aus einer Vielzahl von Zeitmultiplexschaltern (ZS) und jeweils einem Multiplexer (M) und einem Demultiplexer (D) gebildet wird, dass die Zwischenleitungen (ZLK, ZLG) mit Verbindungsverkehr sowohl mit der einen Gruppe von Einrichtungen (AB) als auch mit der anderen Gruppe von Einrichtungen (AF) der zusätzlichen Koppelstufe verbunden sind, während die Zwischenleitungen (ZLK, ZLG) mit Teilnehmerverkehr nur mit der zweiten Gruppe von Einrichtungen (AF) der zusätzlichen Koppelstufe (KP) verbunden sind und die Eingänge (AFK, ABK) der Multiplexer (M1, M2) an der Umschalteeinrichtung (UK) für die ankommende Richtung und die Eingänge (AFG, ABG) der Demultiplexer (D1, D2) an der Umschalteeinrichtung (UG) für die abgehende Richtung angeschlossen sind.

4. Schaltungsanordnung nach Anspruch 3, dadurch gekennzeichnet, dass in die an beiden Gruppen (AB, AF) angeschlossenen Zwischenleitungen (ZLK, ZLG) individuelle Schalteinrichtungen (S) zur Unterbrechung derselben eingeschleift sind, wobei die eine Gruppe (AF) mit den Zwischenleitungen (ZL) jeweils vor und die andere Gruppe (AB) mit den Zwischenleitungen (ZL) jeweils hinter den Schalteinrichtungen (S) verbunden sind.

5. Schaltungsanordnung nach einem der Ansprüche 2 bis 4, dadurch gekennzeichnet, dass eine Aufschalteeinrichtung (AS, Fig. 3) mit den Aus- bzw. Eingängen der Multiplexer (M1, M2) bzw. der Demultiplexer (D1, D2) der zusätzlichen Koppelstufe (KP) mit den an den den Abfrageplätzen (PL) zugeordneten Koppelgruppen (KGP) angeschlossenen Zwischenleitungen (ZLKx, ZLGx) verbunden sind, und zwar mit beiden Seiten der in die Zwischenleitungen (ZLKx, ZLGx) eingeschleiften Umschalteeinrichtungen (UK, UG).

**Claims**

1. Circuit arrangement for connecting operator positions (PL) to a multistage time-multiplex telephone exchange, having a first switching stage (KA) consisting of a plurality of coupling groups (KG) for the connection of subscriber circuits, trunks, operator positions, etc., whereby one or several separate coupling groups (KP) for the operator positions (PL) are exclusively provided, and each coupling group is connected with the subsequent coupling groups via a time-multiplex connecting line being operated in both directions, characterized in, that an additional switching stage (KP) for the connection of an operator position (PL) is looped into the connecting lines available for subscriber and trunk traffic between the other coupling groups (KG1 to KGn) of the first switching stage (KA) and the second switching stage (KB), that the terminals for the operator positions (PL) of the additional switching stage (KP) are connected via switch-over units (UG, UK) to those connecting lines (ZLKx, ZLGx) which connect the coupling groups (KGP) for the operator positions (PL) of the first switching stage (KA) with the second switching stage (KB), and that the terminals of the additional switching stage (KP) attached to subscriber and trunk lines are connected with the connecting lines (ZLK1 to ZLKn, ZLG1 to ZLGn) which connect the other coupling groups of the first switching stage (KA) with the second switching stage (KB).

2. Circuit arrangement according to claim 1, characterized in, that each connecting line (ZLG, ZLK) connecting coupling groups (KG1 to KGn) handling subscriber or trunk traffic with the subsequent switching stage (KB) is connected to a time-multiplex switch (ZS), that the outputs of the time-multiplex switches (ZS) for the incoming direction (K) are connected with a multiplexer (M) and the outputs for the outgoing direction (G) are connected with a demultiplexer (D), that the output of the multiplexer (M) is connected with the switch-over unit (UK) for the incomming direction and the input of the demultiplexer is connected with the switch-over unit (UG) for the outgoing direction and that the additional switching stage (KP) is formed by the time-multiplex switches (ZS), the multiplexer (M) and the demultiplexer (D).

3. Circuit arrangement according to one of claims 1 or 2, characterized in, that the additional switching stage (KP) is subdivided in two groups of arrangements (AB, AF), whereby each group consists of a plurality of time-multiplex switches (ZS), a multiplexer (M) and a demultiplexer (D), that the connecting lines (ZLK, ZLG) handling trunk traffic are connected as well with one group (AB) as with the other group (AF) of arrangements of the additional switching stage (KP) whereas the connecting lines (ZLK, ZLG) with subscriber traffic are only connected with the second group (AF) of arrangements of the additional switching stage (KP) at that the inputs (AFK, ABK) of the multiplexer (M1, M2) are connected with the switch-over unit (UK) for the incomming direction and the inputs (AFG, ABG) of the demultiplexer (D1, D2) are connected with the switch-over (UG) for the outgoing direction.

4. Circuit arrangement according to one of claims 2 or 3, characterized in, that in those connecting lines (ZLK, ZLG), which are connected with both groups (AB, AF), individual switching units (S) are looped in for disconnection, whereby one group (AF) is connected with the connecting lines (ZL) before and the other group (AB) is connected with the connecting lines (ZL) behind the switching units (S).

5. Circuit arrangement according to one of claims 2 to 4, characterized in, that an offering unit (AS) is connected with the outputs respectively inputs of the multiplexer (M1, M2) respectively demultiplexer (D1, D2) of the additional switching stage (KP) and with the connecting lines (ZLKx, ZLGx) connected with the coupling groups (KGP) of the operator positions (PL) namely with both sides of the switch-over units (UK, UG) looped in the connecting lines (ZLKx, ZLGx).

**Revendications**

1. Montage destiné au branchement de postes de réponse (PL) à un central téléphonique mutiplex temporel à plusieurs étages, dans lequel le premier étage de couplage (KA) est constitué par plusieurs groupes de couplage (KG), auxquels sont branchés des circuits de branchement d'utilisateurs, des lignes de liaison, des postes de réponse, etc., un ou plusieurs groupes de couplage (KP) existant exclusivement pour les postes de réponse (PL), et chaque groupe de couplage étant relié à l'étage de couplage suivant par une ligne intermédiaire utilisée en mutiplex temporel dans les deux sens, caractérisé en ce que la connexion à un poste de réponse (PL), depuis les lignes de branchement et de liaison, accessibles en passant par les autres groupes de couplage (KG1 à KGn) du premier étage de couplage (KA), se fait par l'inermédiaire d'un étage de couplage supplémentaire (KP), intercalé entre le premier étage de couplage (KA) et le deuxième (KB), les bornes de cet étage de couplage supplémentaire (KP) correspondant aux postes de réponse (PL) étant branchées, par l'intermédiaire de dispositifs de commutation (UG, UK), à celles des lignes intermédiaires (ZLKx, ZLGx) qui relient les groupes de couplage (KGP) du premier étage de couplage (KA), correspondant aux postes de réponse (PL), au deuxième étage de couplage, et en ce que les bornes de l'étage de couplage supplémentaire (KP), qui correspondent aux lignes de branchement et de liaison, sont branchées aux lignes intermédiaires (ZLK1 à ZLKn, ZLG1 à ZLGn), qui relient les autres groupes de couplage du premier étage de couplage (KA) au deuxième étage de couplage (KB).

2. Montage selon la première revendication, caractérisé en ce que, dans l'étage de couplage supplémentaire (KP), chaque ligne intermédiaire (ZLK, ZLG), qui relie les groupes de couplage ayant un trafic d'utilisateurs ou de liaison, ou les deux (KG1 à KGn), à l'étage de couplage (KB) suivant, est branchée à un commutateur multiplex temporel (ZS), en ce que les sorties des commutateurs multiplex temporels (ZS) sont,. dans le sens de l'arrivée (K), reliées à un multiplexeur (M), et dans le sens du départ (G), reliées à un démultiplexeur (D), et la sortie du multiplexeur (M) est branchée au dispositif de commutation (UK), pour le sens de l'arrivée, et l'entrée de démultiplexeur (D) au dispositif de commutation (UG), pour le sens de départ; l'étage de couplage supplémentaire (KP) est constitué par les commutateurs multiplex temporels (ZS), le multiplexeur (M) et de démultiplexeur (D).

3. Montage selon la première ou la deuxième revendication, caractérisé en ce que l'étage de couplage supplémentaire (KP) est divisé en deux groupes de dispositifs (AB, AF), chacun de ces groupes étant constitué par un grand nombre de commutateurs multiplex temporels (ZS), ainsi que par un multiplexeur (M) et un démultiplexeur (D), en ce que les lignes intermédiaires (ZLK, ZLG) écoulant un trafic de liaison sont reliées, aussi bien à l'un des groupes de dispositifs (AB), qu'à l'autre (AF) de l'étage de couplage supplémentaire, tandis que les lignes intermédiaires (ZLK, ZLG) écoulant un trafic d'utilisateurs ne sont reliées qu'au deuxième groupe de dispositifs (AF) de l'étage de couplage supplémentaire (KP), et les entrées (AFK, ABK) des multiplexeurs (M1, M2) sont reliées au dispositif de commutation (UK) servant pour le sens de l'arrivée, les entrées (AFG, ABG) des démultiplexeurs (D1, D2) étant reliées au dispositifs de commutation (UG) servant pour le sens du départ.

4. Montage selon la troisième revendication, caractérisé en ce que des dispositifs de commutation individuels (S), destinés à couper les lignes intermédiaires (ZLK, ZLG) branchées aux deux groupes (AB, AF), sont intercalés dans ces lignes, l'un des groupes (AF) étant relié aux lignes intermédiaires (ZL) avant les dispositifs de commutation (S), l'autre groupe (AB) après.

5. Montage selon l'une des revendicatins 2 à 4, caractérisé en ce qu'un dispositif d'insertion (AS, fig. 3) est relié aux sorties des multiplexeurs (M1, M2) et aux entrées des démultiplexeurs (D1, D2) de l'étage de couplage supplémentaire (KP), ainsi qu' aux lignes supplémentaires (ZLKx, ZLGx) branchées aux groupes de couplage (KGP) correspondant aux postes de réponse (PL), et ce par les deux côtés des dispositifs de commutation (UK, UG), intercalés dans les lignes intermédiaires (ZLKx, ZLGx).

Fig. 1

Fig.2

0 024 725

11

Fig. 3